# EUROPEAN PATENT SPECIFICATION

(11) **EP 1 813 085 B1**
(45) Date of publication and mention of the grant of the patent: **23.09.2009**
(21) Application number: 05849141.6
(22) Date of filing: 18.11.2005
(51) Int. Cl.: H04L 29/06, G06K 19/077

(54) **TECHNIQUE AND HARDWARE FOR COMMUNICATING WITH BACKSCATTER RADIO FREQUENCY IDENTIFICATION READERS**
VERFAHREN UND HARDWARE ZUR KOMMUNIKATION MIT RÜCKSTREUUNGS-RFID-LESERN
TECHNIQUE ET MATERIEL POUR COMMUNIQUER AVEC DES LECTEURS D'IDENTIFICATION PAR RADIOFREQUENCE A RETRODIFFUSION

(30) Priority: 19.11.2004 US 629436 P
(43) Date of publication of application: 01.08.2007
(73) Proprietor: Sensormatic Electronics Corporation, Boca Raton, Florida 33487 (US); Shafer, Gary Mark, Boca Raton, FL 33496 (US)
(72) Inventor: SHAEFER, Gary, Mark., Boca Raton, FL 33496 (US)
(74) Representative: Hafner, Dieter
(86) International application number: PCT/US2005/041674
(87) International publication number: WO 2006/055705

(56) References cited:
- US-A1- 2003 183 699
- ISODA Y ET AL: "Ubiquitous sensors based human behavior modeling and recognition using a spatio-temporal representation of user states" ADVANCED INFORMATION NETWORKING AND APPLICATIONS, 2004. AINA 2004. 18TH INTERNATIONAL CONFERENCE ON FUKUOKA, JAPAN 29-31 MARCH 2004, PISCATAWAY, NJ, USA,IEEE, vol. 1, 29 March 2004 (2004-03-29), pages 512-517, XP010695468 ISBN: 0-7695-2051-0
- HOYT S ET AL: "A tree tour with radio frequency identification (RFID) and a personal digital assistant (PDA)" IECON-2003. PROCEEDINGS OF THE 29TH. ANNUAL CONFERENCE OF THE IEEE INDUSTRIAL ELECTRONICS SOCIETY. ROANOKE, VA, NOV. 2 - 6, 2003, ANNUAL CONFERENCE OF THE IEEE INDUSTRIAL ELECTRONICS SOCIETY, NEW YORK, NY : IEEE, US, vol. VOL. 3 OF 3. CONF. 29, 2 November 2003 (2003-11-02), pages 2035-2040, XP010691606 ISBN: 0-7803-7906-3

## Description

### BACKGROUND

Radio frequency identification (RFID) utilizes interrogation and reply frequencies in the radio frequency (RF) band to perform electronic identification functions. A typical RFID system includes a reader and one or more RFID tags communicating over a wireless RF communication channel. An RFID tag is attached to an item to be identified, and the reader includes hardware to interrogate the RFID tag. The RFID tag responds to an RF interrogation signal and provides identification information related to the item in the form of an RF response signal. In some cases, RFID tags may communicate with a reader using backscatter technology by reflecting radio waves back to the reader and modulating the reflected signal to transmit data.

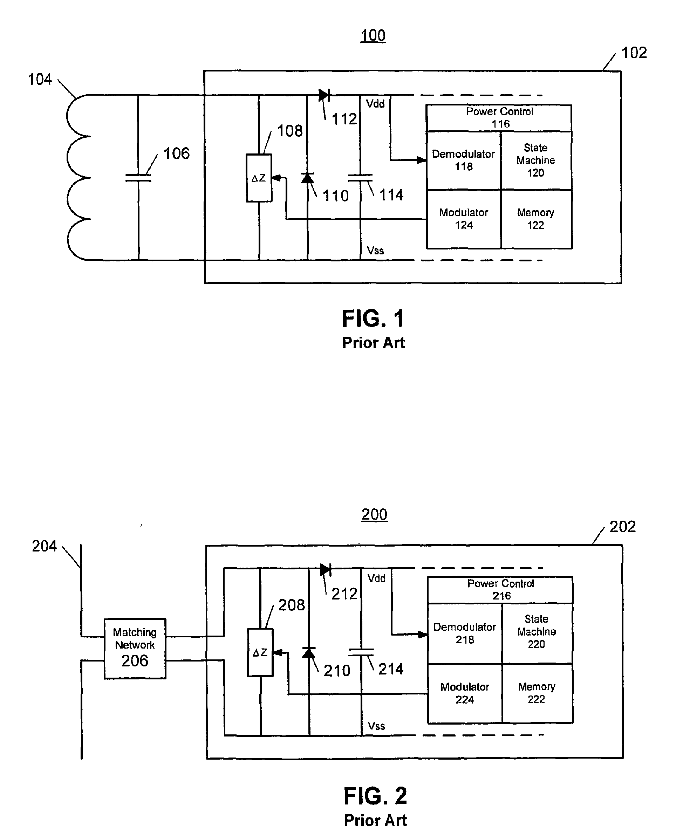

**FIG. 1** illustrates a conventional RFID tag 100. As shown, the RFID tag 100 includes an integrated circuit (IC) 102 and an antenna coil 104. The antenna coil 104 is connected in parallel to a resonating capacitor 106 to form an LC resonant circuit, which may be tuned to couple radiated energy from input signals received from an RFID reader and to transmit output signals to the RFID reader.

The RFID tag 100 also includes modulating impedance 108 in parallel with the LC resonant circuit and rectifier diodes 110 and 112 across the modulating impedance 108. The rectifier diodes 110, 112 may rectify waveforms, of input signals received by the antenna coil 104 and detect the envelope of the received signal waveform. A capacitor 114 is connected in parallel across diode 112 and follows the detected envelope of input signal waveforms.

The RFID tag 100 includes power control block 116, demodulator 118, state machine 120, memory 122, and modulator 124. The power control block 116 may perform power conversion by detecting incoming signals and deriving the necessary power or energy to operate the RFID tag 100. The demodulator 118 may perform demodulation and data recovery functions. For example, the detected envelope across the capacitor 114 may be fed to demodulator 118 where it is demodulated to extract information encoded in input signals. The state machine 120 may perform various processing functions such as controlling the modulating impedance 108 and providing identification information stored in memory 122. For example, commands from an RFID reader may be received by the state machine 120, which sends data to the modulator 124 to vary the modulating impedance 108 in accordance with a reply protocol. The modulating impedance 108 may modulate RFID output signals to be transmitted by antenna coil 104 causing the RFID tag 100 to reply to the RFID reader. The modulator 124 may change impedance at the data rate, which is typically less than a few hundred kilohertz.

**FIG. 2** illustrates another conventional RFID tag 200. The RFID tag 200 is similar in structure and function as the RFID tag 100 discussed with reference to FIG. 1. As shown in FIG. 2, however, the RFID tag 200 includes an IC 202 and a dipole antenna 204 connected to a matching network 206 for coupling radiated energy from input signals received from an RFID reader and transmitting output signals to the RFID reader. The RFID tag 200 includes modulating impedance 208 in parallel with the matching network 206, rectifier diodes 210 and 212 across the modulating impedance 208, and a capacitor 214 is connected in parallel across diode 212. The RFID tag 200 also includes power control block 216, demodulator 218, state machine 220, memory 222, and modulator 224.

In many RFID applications, an operator or machine using an RFID reader to query RFID tags may need to gather data related to the task at hand from equipment, instruments, or other source lacking RFID communication capability. In prior solutions, an operator is required to manually record data from such sources.

Document XP01 0695468 discloses an RFID reader which reads information from RFID tags and sends it to a PC via protocol converter.

The present invention defines an apparatus according to claim 1, a system according to claim 15 and a method according to claim 16. Specific embodiments are set forth in the dependent claims 2-14 and 17-20.

### BRIEF DESCRIPTION OF THE DRAWINGS

**FIG. 1** illustrates a conventional RFID tag.
**FIG. 2** illustrates a conventional RFID tag.
**FIG. 3** illustrates one embodiment of a communications system.
**FIG. 4** illustrates one embodiment of a protocol converter.
**FIG. 5** illustrates one embodiment of an RF Front-End.
**FIG. 6** illustrates one embodiment of a logic flow.

### DETAILED DESCRIPTION

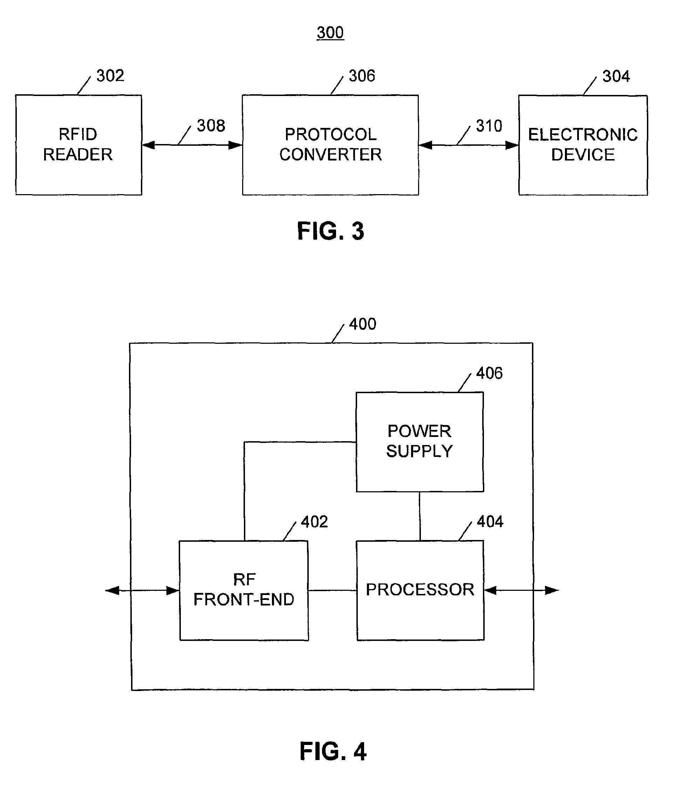

**FIG. 3** illustrates one embodiment of a communications system 300. In various embodiments, the communications system 300 may be implemented as a wired communication system, a wireless communication system, or a combination of both. The communications system 300 may include components and interfaces suitable for communicating over wireless communications media, such as one or more antennas, transmitters, receivers, transceivers, amplifiers, filters, control logic, and so forth. An example of a wireless communication media may include portions of a wireless spectrum, such as the RF spectrum and so forth. Examples of wired communications media may include a wire, cable, metal leads, printed circuit board (PCB), backplane, switch fabric, semiconductor material, twisted-pair wire, co-axial cable, fiber optics, and so forth. The embodiments are not limited in this context.

In various implementations, the communications system 300 may be arranged to communicate data bi-directionally between an RFID reader 302 and an electronic device 304 via a protocol converter 306. The RFID reader 302 may comprise, for example, a backscatter or other type of RFID reader arranged to communicate data according to one or more native RFID protocols.

The electronic device 304 may comprise, for example, any type of electronic device arranged to communicate according to a device protocol (e.g., serial, parallel, Ethernet), but not according to the native RFID protocol of the RFID reader 302. In various embodiments, the electronic device 310 may comprise a device that lacks backscatter or other corresponding RFID communication capability as originally designed, manufactured, assembled, or installed.

The protocol converter 306 may comprise, for example, hardware and/or software to convert data between the native RFID protocol of the RFID reader 302 and the device protocol of the electronic device 304. In various embodiments, the protocol converter 306 may be arranged to add-on, upgrade, retrofit, equip, furnish, or otherwise provide the electronic device 304 with backscatter or other corresponding RFID communication capability.

In various embodiments, the protocol converter 306 may comprise an RF front-end, a processor, and software such as drivers to provide the capability to communicate information between the RFID reader 302 and the electronic device 304. In some implementations, the protocol converter 306 may comprise a software driver stored in the memory of a processor internal to the electronic device 304 to provide backscatter or other RFID communication capability internally. In other implementations, the protocol converter 306 may comprise a software driver stored in the memory of a processor external to the electronic device 304 to provide backscatter or other RFID communication capability as an external add-on to the electronic device 304.

In various embodiments, the protocol converter 306 may provide an inexpensive way to add communication capability between the RFID reader 302 and the electronic device 304. In some implementations, the protocol converter 306 comprises an RF front-end including a few low-frequency and high-frequency components such as an antenna and an electronic switch. In such cases, the protocol converter 306 is not an intentional radiator and does not actually generate any radio frequency energy.

Numerous specific details may be set forth herein to provide a thorough understanding of the embodiments of the invention. It will be understood by those skilled in the art, however, that the embodiments of the invention may be practiced without these specific details. In other instances, well-known methods, procedures, components and circuits have not been described in detail so as not to obscure the embodiments of the invention. It can be appreciated that the specific structural and functional details disclosed herein may be representative and do not necessarily limit the scope of the invention.

It is worthy to note that any reference in the specification to "one embodiment" or "an embodiment" means that a particular feature, structure, or characteristic described in connection with the embodiment is included in at least one embodiment. The appearances of the phrase "in one embodiment" in various places in the specification are not necessarily all referring to the same embodiment.

As shown in FIG. 3, the communications system 300 may comprise an RFID reader 302, such as a backscatter RFID reader, for example. In various embodiments, the RFID reader 302 may comprise multiple elements some of which may be implemented using, for example, a variety of chip architectures including one or more circuits, components, registers, processors, software subroutines, or any combination thereof. The RFID reader 302 may comprise, for example, an antenna coupled to an IC including RF circuitry. RF circuitry may comprise, for example, RF transmitter and receiver portions, each comprising a collection of discrete components such as, capacitors, transistors, and diodes that may be located on or off of the IC.

The RFID reader 302 may communicate over a communication link 308. The communications link 308 may comprise any communications media capable of carrying information signals. For example, communication media may comprise wired communication media, wireless communication media, or a combination of both, as desired for a given implementation.

In various embodiments, the communication link 308 may comprise an RF link including one or more wireless communication media. An example of a wireless communication media may include portions of a wireless spectrum, such as the RF spectrum and so forth. The RFID reader 302 may communicate over the communication link 308 in one or more frequency bands such as, for example: extremely low-frequency (ELF) (30 Hz to 300 Hz); voice-frequency (VF) (300 Hz to 3 kHz); very low-frequency (VLF) (3 kHz to 30 kHz); low-frequency (LF) (30 kHz to 300 kHz); medium-frequency (MF) (300 kHz to 3 MHz); high-frequency (HF) (3 MHz to 30 MHz); very high-frequency (VHF) (30 MHz to 300 MHz); ultra high-frequency (UHF) (300 MHz to 3 GHz); super high-frequency (SHF) (3 GHz to 30 GHz); and extremely high-frequency (EHF) (30 GHz to 300 GHz).

In various embodiments, the RFID reader 302 may be arranged to send a request for information comprising an RF interrogation signal. The RF interrogation signal may comprise modulated RF data. In various implementations, the RFID reader 302 may be arranged to communicate data according to one or more predefined RFID protocols. In various embodiments, the RFID reader 302 may communicate data according to a native RFID protocol for requesting information and receiving replies. The RFID protocol may be defined by one or more standards as promulgated by a standards organization, such as the International Standards Organization (ISO), the Institute of Electrical and Electronics Engineers (IEEE), and so forth. Examples of RFID protocols include, but are not limited to, Electronic Product Code (EPC) protocols such as EPC Class 0, 0+, EPC Class 1 Generation 1 (Gen 1), and EPC Class 1 Generation 2 (Gen 2), ISO protocols, and various proprietary RFID protocols.

The communications system 300 may comprise an electronic device 304. In various embodiments, the electronic device 304 may comprise, or be implemented as, any type of device, computer, instrument, equipment, appliance, machine, and so forth, arranged to generate, collect, and/or record data. The data generally may represent any type of content meant for an operator or machine and may comprise textual information, numerical information, alphanumeric symbols, character symbols, and so forth. Examples of an electronic device 304 include, but are not limited to, medical equipment (e.g. EKG, EEG), diagnostic equipment, life support instruments, and so forth. The embodiments are not limited in this context.

In various implementations, the electronic device 304 may comprise a processor to generate, collect, and/or record data. Examples of a processor may include, but are not limited to, a general purpose processor, a dedicated processor, such as a controller, a microcontroller, an embedded processor, a digital signal processor (DSP), a field programmable gate array (FPGA), a programmable logic device (PLD), a network processor, an I/O processor, an integrated circuit such as an application specific integrated circuit (ASIC), and so forth.

The electronic device 304 may be arranged to communicate according to a device protocol. Examples of a device protocol include, but are not limited to, a serial protocol (e.g., RS-232, RS-422, RS-423, RS-485), a parallel protocol (e.g., Centronics, ECP, EPP, bus protocol), an Ethernet protocol, or any other protocol understood by the electronic device 304. In various embodiments, the electronic device 304 may be arranged to communicate according to a device protocol, but not according to the native RFID protocol of the RFID reader 302. The electronic device 304 may comprise, for example, a device, instrument, or equipment that includes existing external data communication streams (e.g., serial, parallel, Ethernet), but lacks backscatter or other corresponding RFID communication capability as originally designed, manufactured, assembled, or installed.

The communications system 300 may comprise a protocol converter 306. In various embodiments, the protocol converter 306 may comprise hardware and/or software to convert data between the native RFID protocol of the RFID reader 302 and the device protocol of the electronic device 304. In various implementations, the protocol converter 306 may be arranged to add-on, upgrade, retrofit, equip, furnish, or otherwise provide the electronic device 304 with backscatter or other corresponding RFID communication capability. As such, the protocol converter 306 may be arranged to allow the electronic device 304 to masquerade or behave similarly to an RFID tag.

The protocol converter 306 may comprise, for example, an RF front-end, a processor, and software such as drivers to provide the capability to transfer data between the RFID reader 302 and the electronic device 304. Although FIG. 3 illustrates the protocol converter 306 as being external to the electronic device 304, in various embodiments, the electronic device 304 may comprise the protocol converter 306.

In various implementations, the protocol converter 306 may be arranged to receive a request for information from the RFID reader 302. For example, the protocol converter 306 may receive an RF interrogation signal comprising modulated RF data from the RFID reader 302 over the communication link 308.

In various implementations, the protocol converter 306 may be arranged to convert information from a protocol native to the RFID reader 302 to a protocol that can be understood by the electronic device. For example, the protocol converter 306 may receive information from the RFID reader 302 communicated according to an RFID protocol for requesting information and receiving replies such as an EPC protocol (e.g., EPC Class 0, 0+, Gen 1, Gen 2), and ISO protocol, or other proprietary RFID protocol. The protocol converter 306 may be arranged to demodulate RF data received from the RF reader 302 to extract commands. In various embodiments, the protocol converter 306 may be arranged to convert the request for information received from the RFID reader data 302 into a device protocol such as a serial protocol (e.g., RS-232, RS-422, RS-423, RS-485), a parallel protocol (e.g., Centronics, ECP, EPP), an Ethernet protocol, or any other protocol understood by the electronic device 304.

In various implementations, the protocol converter 306 may be arranged to communicate with the electronic device 304 according to the device protocol. For example, the protocol converter 306 may send data formatted for the electronic device 304 over the communication link 310. The formatted data may comprise commands and/or requests for information. The communications link 310 may comprise any communications media capable of carrying information signals. For example, communication media may comprise wired communication media, wireless communication media, or a combination of both, as desired for a given implementation. In various embodiments, the communication link 310 may comprise a serial, parallel, or Ethernet communication channel and may enable bi-directional communication between the protocol converter 306 and the electronic device 304.

In various implementations, the electronic device 310 may be arranged to provide device information to the protocol converter 306. For example, the electronic device 304 may provide device data in response to formatted commands or requests for information. The electronic device 304 may provide the device information to the protocol converter 306 over the communication link 310. In various embodiments, the device data may represent device information such as identification information, status information, diagnostic information, code information, text information, numeric and alphanumeric information, symbols, or other content. The device data may take the form of analog or digital signals, electrical signals, a sequence of bits or bytes, for example, among other forms of information, formatted to exchange information between electrical equipment, processors, and/or computers. The embodiments are not limited in this context.

In various implementations, the protocol converter 306 may be arranged to transmit the device data to the RFID reader according to an RFID reply protocol. The protocol converter 306 may send the device data to over the communication link 308 to the RFID reader 320 by backscatter communication, for example. In various embodiments, the protocol converter 306 may transmit an RFID reply signal comprising modulated RF data. The embodiments are not limited in this context.

In various implementations, the communications system 300 may allow an operator or machine using an RFID reader to query equipment, instruments, or other source lacking RFID communication capability. An example of this activity would be reading an RFID tag to obtain the identity of a downed fireman and then determining the status of life support instruments of the identified fireman. Another example would be identifying a patient in a hospital and then associating data coming from various data recording instruments (e.g., EKG, EEG, etc.). The embodiments are not limited in this context.

FIG. 4 illustrates one embodiment of a protocol converter 400. In various embodiments, the protocol converter 400 may comprise or be implemented as the protocol converter 306 of FIG. 3. The embodiments are not limited in this context.

As shown in FIG. 4, the protocol converter 400 may be illustrated and described as comprising several separate functional elements. In various embodiments, the elements may be connected by one or more communications media. Communications media generally may comprise any medium capable of carrying information signals. For example, communication media may comprise wired communication media, wireless communication media, or a combination of both, as desired for a given implementation.

The elements may comprise, or be implemented as, one or more hardware components (e.g., processors, DSPs, PLDs, ASICs, circuits, registers), software components (e.g., programs, subroutines, logic) and/or combination thereof. Although certain elements may be described by way of example, it can be appreciated that a greater or lesser number of elements may be used and still fall within the scope of the embodiments.

As shown in FIG. 4, the protocol converter 400 may comprise an RF front-end 402. In various embodiments, the RF front-end 402 may be arranged to allow both data transmission and reception using hardware such as an antenna, data recovery circuitry, and a modulator, for example. Examples of an antenna may include an internal antenna, an omni-directional antenna, a monopole antenna, a dipole antenna, a lead-frame antenna, an end-fed antenna, a linear polarized antenna, a circular polarized antenna, a patch antenna, a plane-inverted F antenna, a micro-strip antenna, a diversity antenna, a dual antenna, an antenna array, a helical antenna, and so forth. The embodiments are not limited in this context.

In various embodiments, the RF front-end 402 may comprise data recovery circuitry to recover data from an RFID reader. The data recovery circuitry may comprise, for example, rectifier circuitry for rectifying waveforms of signals received by the antenna and detecting the envelope of the received signals. The data recovery circuitry also may comprise a demodulator for performing demodulation and data recovery functions, such as extracting information encoded in received signals.

In various embodiments, the RF front-end 402 may comprise a modulator. The modulator may comprise, for example, an electronic switch such as a transistor, FET, PIN-Diode, Varactor Diode, Schottkey Diode, or any electronic component capable of modulating the backscatter characteristics of the antenna.

The protocol converter 400 may comprise a processor 404. In various implementations, the RF front-end 402 may provide unformatted data to the processor 404 for conversion from an RFID protocol native to an RFID reader to a device protocol understood by an electronic device. In various embodiments, the processor 404 may comprise any physical or logical entity for communicating information and may be implemented as hardware, software, or any combination thereof, as desired for a given set of design parameters or performance constraints. The processor 404 may comprise, for example, a general purpose processor, a dedicated processor, such as a controller, a microcontroller, an embedded processor, a DSP, an FPGA, a PLD, a network processor, an I/O processor, an integrated circuit such as an ASIC, and so forth.

In various embodiments, the processor 404 may comprise memory. The memory may include any machine-readable or computer-readable media capable of storing data, including both volatile and non-volatile memory. For example, the memory may include read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, or any other type of media suitable for storing information. The embodiments are not limited in this context.

In various embodiments, the processor 404 may comprise software to convert information between an RFID protocol such as an EPC protocol (e.g., EPC Class 0, 0+, Gen 1, Gen 2), and ISO protocol, or other proprietary RFID protocol native to an RFID reader and a device protocol such as a serial protocol (e.g., RS-232, RS-422, RS-423, RS-485), a parallel protocol (e.g., Centronics, ECP, EPP), an Ethernet protocol, or any other protocol understood by a particular electronic device. In various implementations, the software may comprise a software driver resident in memory of the processor 404.

In various embodiments, the software may comprise, or be implemented as, software driver, a software module, an application, a program, a subroutine, an instruction set, computing code, words, values, symbols or combination thereof. The software may be implemented according to a predefined computer language, manner or syntax, for instructing a processor to perform a certain function. Examples of a computer language may include C, C++, Java, BASIC, Perl, Matlab, Pascal, Visual BASIC, assembly language, machine code, micro-code for a network processor, and so forth. The embodiments are not limited in this context.

In some embodiments, the processor 404 may comprise an internal processor of an electronic device, such as an embedded microcontroller to control device communication. In such embodiments, the protocol converter 400 may be arranged to provide backscatter or other RFID communication capability internally to an electronic device. In various implementations, software drivers embedded within memory of a processor internal to an electronic device would allow the electronic device to communicate using an RFID protocol native to an RFID reader. Once the required hardware is added, it is only necessary to use the correct RFID protocol native to the RFID reader in order to communicate.

In other embodiments, the processor 404 may comprise a processor external to an electronic device. In such embodiments, removing the requirement for a software driver to be resident on the memory of the electronic device may allow equipment and instruments with negligible upgrade capability to be sent data from an RFID reader via a serial or parallel communication. In various implementations, the processor 404 may convert and format data according to a device protocol before sending the data to the electronic device. Accordingly, the protocol converter 400 may be arranged to provide backscatter or other RFID communication capability as an external add-on to the electronic device.

The protocol converter 400 may comprise a power source 406. In various embodiments, the power source 406 may be arranged to supply power to one or more elements of the protocol converter 400. The power source may comprise, for example, a battery, DC power source, or other type of power controller. The embodiments are not limited in this context.

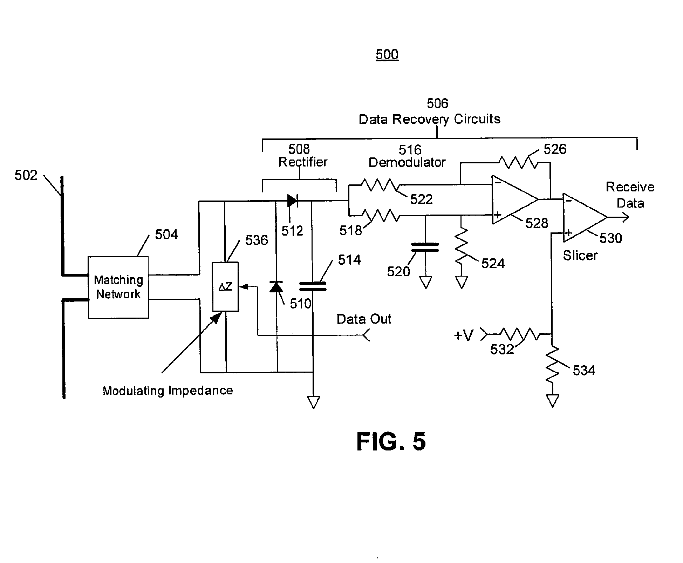

**FIG. 5** illustrates one embodiment of an RF front-end 500. In various embodiments, the RF front-end 500 may comprise or be implemented as the RF front-end 402 of FIG. 4. The embodiments are not limited in this context.

As shown in FIG. 5, the RF front-end 500 may comprise an antenna 502 (e.g., dipole antenna) appropriate for the frequency of operation connected to a matching network 504 for coupling radiated energy from signals received from an RFID reader and for transmitting signals to the RFID reader. In other embodiments, the RF front-end 500 may comprise an antenna coil connected in parallel to a resonating capacitor to form an LC resonant circuit. The embodiments are not limited in this context.

The RF front-end 500 may comprise data recovery circuitry 506 to recover data from an RFID reader. In various embodiments, the data recovery circuitry 506 may comprise rectifier circuitry 508 including rectifier diodes 510 and 512 and a capacitor 514 connected in parallel across diode 512. The rectifier diodes 510, 512 may rectify RF signals received by the antenna 502 and to detect the envelope of received RF signals. The capacitor 514 connected in parallel across diode 512 may follow the detected envelope of received RF signals. The embodiments are not limited in this context.

The data recovery circuitry 506 may comprise a demodulator 516. In various embodiments, the demodulator 516 may comprise a low-pass filter including resistor 518 and capacitor 520 and a differential amplifier including resistors 522, 524, 526 and operational amplifier 528. The demodulator 516 may comprise a comparator, such as a slicer, including operational amplifier 530 and resistors 532, 534. In various implementations, the demodulator 516 may perform demodulation and data recovery functions such as extracting commands and requests for information encoded in received RF signals. The embodiments are not limited in this context.

The RF front-end 500 may comprise a modulator 536, such as a modulating impedance. In various embodiments, the modulator 536 may comprise an electronic switch such as a transistor, FET, PIN-Diode, Varactor Diode, Schottkey Diode, or any electronic component capable of modulating the backscatter characteristics of the antenna 502. The embodiments are not limited in this context. For example, in some embodiments, the RF front-end 500 may not include the modulator 536 and may be configured to basically monitor or listen to data on a communications link. In such embodiments, the RF front-end 500 may comprise a demodulator such as an AM demodulator (not shown) including one or more diodes.

Operations of the above embodiments may be further described with reference to a logic flow. It can be appreciated that a given logic flow merely provides an example of how the general functionality can be implemented. Further, the given logic flow does not necessarily have to be executed in the order presented unless otherwise indicated. In addition, the given logic flow may be implemented by a hardware element, a software element executed by a processor, or any combination thereof. Some embodiments may be implemented, for example, using a machine-readable medium or article which may store an instruction or a set of instructions that, if executed by a machine, may cause the machine to perform a method and/or operations in accordance with the embodiments. The embodiments are not limited in this context.

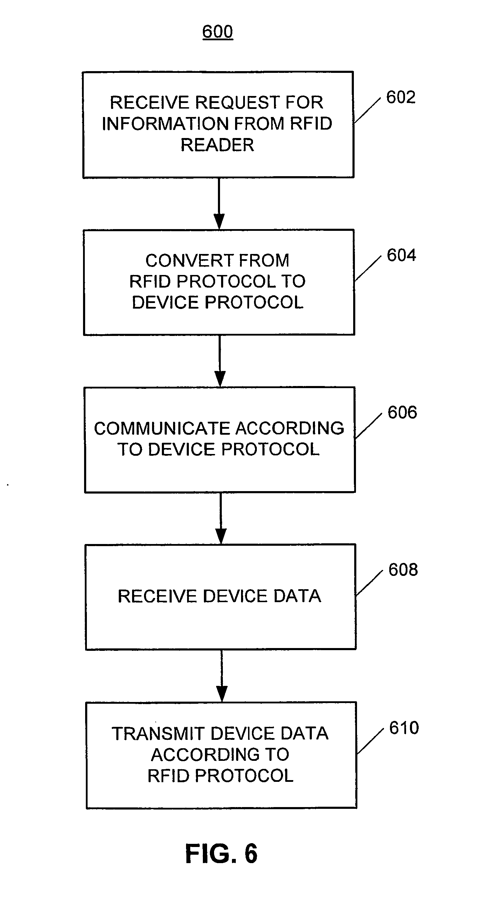

**FIG. 6** illustrates one embodiment of a logic flow 600. In various embodiments, the logic flow 600 may comprise receiving a request for information from an RFID reader, at block 602. The request for information may comprise, for example, an RF interrogation signal comprising modulated RF data.

The logic flow 600 may comprise converting the request for information from a protocol native to the RFID reader to a device protocol understood by a particular electronic device, at block 604. The native RFID protocol may comprise, for example, an EPC protocol (e.g., EPC Class 0, 0+, Gen 1, Gen 2), and ISO protocol, or other proprietary RFID protocol. The device protocol may comprise a serial protocol (e.g., RS-232, RS-422, RS-423, RS-485), a parallel protocol (e.g., Centronics, ECP, EPP), an Ethernet protocol, or any other protocol understood by the particular electronic device. The electronic device may comprise, for example, a device, instrument, or equipment that includes existing external data communication streams (e.g., serial, parallel, Ethernet), but lacks backscatter or other corresponding RFID communication capability as originally designed, manufactured, assembled, or installed.

The logic flow 600 may comprise communicating the request for information to the electronic device according to the device protocol, at block 606, and receiving device data from the electronic device, at block 608. In various embodiments, the device data may represent device information such as identification information, status information, diagnostic information, code information, text information, numeric and alphanumeric information, symbols, or other content.

The logic flow 600 may comprise transmitting the device data to the RFID reader according to the native RFID protocol at block 610. In various embodiments, the device data may be transmitted to the RFID reader by backscatter communication.

## Claims

1. An apparatus comprising:
a protocol converter (306) to receive a request for information from an RFID reader (302), said request for information communicated according to an RFID protocol native to said RFID reader (302), said protocol converter (306) to convert said request for information from said RFID protocol to a device protocol and to communicate said request for information to an electronic device (304) lacking RFID communication capability according to said device protocol.

2. The apparatus of claim 1, said protocol converter to receive device data from said electronic device according to said device protocol and to transmit said device data to said RFID reader according to said RFID protocol.

3. The apparatus of claim 2, said protocol converter to transmit said device data by backscatter communication.

4. The apparatus of claim 1, said RFID protocol comprising at least one of an EPC protocol, an ISO protocol, or proprietary RFID protocol.

5. The apparatus of claim 1, said device protocol comprising at least one of a serial protocol, a parallel protocol, and an Ethernet protocol.

6. The apparatus of claim 1, said protocol converter comprising an RF front-end to receive request for information.

7. The apparatus of claim 6, wherein said RF-front end comprises:
an antenna;
data recovery circuitry; and
a modulator.

8. The apparatus of claim 7, wherein said data recovery circuitry comprises:
rectifier circuitry; and
a demodulator.

9. The apparatus of claim 1 wherein said protocol converter comprises a processor to convert said RFID protocol to said device protocol.

10. The apparatus of claim 9, wherein said processor comprises an internal processor of said electronic device.

11. The apparatus of claim 9, wherein said processor comprises a processor external to said electronic device.

12. The apparatus of claim 9, wherein said processor comprises a software driver stored on memory.

13. The apparatus of claim 1, said protocol converter to provide internal RFID communication capability to said electronic device.

14. The apparatus of claim 1, said protocol converter to provide add-on RFID communication capability to said electronic device.

15. A system comprising:
an electronic device (304) to communicate device data according to a device protocol, said electronic device (304) lacking RFID communication capability; and
a protocol converter (306) to receive a request for information from an RFID reader (302), said request for information communicated according to an RFID protocol native to said RFID reader (302), said protocol converter (306) to convert said request for information from said RFID protocol to said device protocol and to communicate said request for information to said electronic device (304).

16. A method comprising:
receiving a request for information from an RFID reader (302), said request for information communicated according to an RFID protocol native to said RFID reader (302);
converting said request for information from said RFID protocol to a device protocol; and
communicating said request for information to an electronic device (304) lacking RFID communication capability according to said device protocol.

17. The method of claim 16, further comprising:
receiving device data from said electronic device according to said device protocol; and
transmitting said device data to said RFID reader according to said RFID protocol.

18. The method of claim 17, further comprising transmitting said device data by backscatter communication.

19. The method of claim 16, said RFID protocol comprising at least one of an EPC protocol, an ISO protocol, or proprietary RFID protocol.

20. The method of claim 16, said device protocol comprising at least one of a serial protocol, a parallel protocol, and an Ethernet protocol.

## Patentansprüche

1. Vorrichtung, umfassend:
einen Protokollumsetzer (306) zum Empfangen einer Anforderung von Informationen von einem RFID-Leser (302), wobei die Anforderung von Informationen gemäß einem für den RFID-Leser (302) nativen RFID-Protokoll übermittelt wird, wobei der Protokollumsetzer (306) dazu dient, die Anforderung von Informationen aus dem RFID-Protokoll in ein Einrichtungsprotokoll umzusetzen und die Anforderung von Informationen gemäß dem Einrichtungsprotokoll zu einer elektronischen Einrichtung (304) zu übermitteln, der RFID-Kommunikationsfähigkeit fehlt.

2. Vorrichtung nach Anspruch 1, wobei der Protokollumsetzer dazu dient, Einrichtungsdaten von der elektronischen Einrichtung gemäß dem Einrichtungsprotokoll zu empfangen und die Einrichtungsdaten gemäß dem RFID-Protokoll zu dem RFID-Leser zu senden.

3. Vorrichtung nach Anspruch 2, wobei der Protokollumsetzer dazu dient, die Einrichtungsdaten durch Rückstreukommunikation zu senden.

4. Vorrichtung nach Anspruch 1, wobei das RFID-Protokoll mindestens eines der folgenden umfasst: ein EPC-Protokoll, ein ISO-Protokoll oder ein proprietäres RFID-Protokoll.

5. Vorrichtung nach Anspruch 1, wobei das Einrichtungsprotokoll mindestens eines der folgenden umfasst: ein serielles Protokoll, ein paralleles Protokoll und ein Ethernet-Protokoll.

6. Vorrichtung nach Anspruch 1, wobei der Protokollumsetzer ein HF-Frontend zum Empfangen der Anforderung von Informationen umfasst.

7. Vorrichtung nach Anspruch 6, wobei das HF-Frontend Folgendes umfasst:
eine Antenne;
Datenwiedergewinnungsschaltkreise; und
einen Modulator.

8. Vorrichtung nach Anspruch 7, wobei die Datenwiedergewinnungsschaltkreise Folgendes umfassen:
Gleichrichterschaltkreise; und
einen Demodulator.

9. Vorrichtung nach Anspruch 1, wobei der Protokollumsetzer einen Prozessor zum Umsetzen des RFID-Protokolls in das Einrichtungsprotokoll umfasst.

10. Vorrichtung nach Anspruch 9, wobei der Prozessor einen internen Prozessor der elektronischen Einrichtung umfasst.

11. Vorrichtung nach Anspruch 9, wobei der Prozessor einen Prozessor außerhalb der elektronischen Einrichtung umfasst.

12. Vorrichtung nach Anspruch 9, wobei der Prozessor einen im Speicher gespeicherten Softwaretreiber umfasst.

13. Vorrichtung nach Anspruch 1, wobei der Protokollumsetzer dazu dient, der elektronischen Einrichtung interne RFID-Kommunikationsfähigkeit bereitzustellen.

14. Vorrichtung nach Anspruch 1, wobei der Protokollumsetzer dazu dient, der elektronischen Einrichtung Ergänzungs-RFID-Kommunikationsfähigkeit bereitzustellen.

15. System, umfassend:
eine elektronische Einrichtung (304) zum Übermitteln von Einrichtungsdaten gemäß einem Einrichtungsprotokoll, wobei der elektronischen Einrichtung (304) RFID-Kommunikationsfähigkeit fehlt; und
einen Protokollumsetzer (306) zum Empfangen einer Anforderung von Informationen von einem RFID-Leser (302), wobei die Anforderung von Informationen gemäß einem für den RFID-Leser (302) nativen RFID-Protokoll übermittelt wird, wobei der Protokollumsetzer (306) dazu dient, die Anforderung von Informationen aus dem RFID-Protokoll in das Einrichtungsprotokoll umzusetzen und die Anforderung von Informationen zu der elektronischen Einrichtung (304) zu übermitteln.

16. Verfahren mit den folgenden Schritten:
Empfangen einer Anforderung von Informationen von einem RFID-Leser (302), wobei die Anforderung von Informationen gemäß einem für den RFID-Leser (302) nativen RFID-Protokoll übermittelt wird;
Umsetzen der Anforderung von Informationen aus dem RFID-Protokoll in ein Einrichtungsprotokoll; und
Übermitteln der Anforderung von Informationen gemäß dem Einrichtungsprotokoll zu einer elektronischen Einrichtung (304), der RFID-Kommunikationsfähigkeit fehlt.

17. Verfahren nach Anspruch 16, ferner mit den folgenden Schritten:
Empfangen von Einrichtungsdaten aus der elektronischen Einrichtung gemäß dem Einrichtungsprotokoll; und
Senden der Einrichtungsdaten zu dem RFID-Leser gemäß dem RFID-Protokoll.

18. Verfahren nach Anspruch 17, ferner mit dem Schritt des Sendens der Einrichtungsdaten durch Rückstreukommunikation.

19. Verfahren nach Anspruch 16, wobei das RFID-Protokoll mindestens eines der folgenden umfasst: ein EPC-Protokoll, ein ISO-Protokoll oder ein proprietäres RFID-Protokoll.

20. Verfahren nach Anspruch 16, wobei das Einrichtungsprotokoll mindestens eines der folgenden umfasst: ein serielles Protokoll, ein paralleles Protokoll und ein Ethernet-Protokoll.

## Revendications

1. Appareil comprenant :
un convertisseur de protocole (306) pour recevoir une requête d'information depuis un lecteur RFID (302), ladite requête d'information étant communiquée selon un protocole RFID natif audit lecteur RFID (302), ledit convertisseur de protocole (306) servant à convertir ladite requête d'information dudit protocole RFID en un protocole de dispositif et à communiquer ladite requête d'information à un dispositif électronique (304) n'ayant pas de capabilité de communication RFID selon ledit protocole de dispositif.

2. Appareil selon la revendication 1, ledit convertisseur de protocole servant à recevoir des données de dispositif dudit dispositif électronique selon ledit protocole de dispositif et à transmettre lesdites données de dispositif audit lecteur RFID selon ledit protocole RFID.

3. Appareil selon la revendication 2, ledit convertisseur de protocole servant à transmettre lesdites données de dispositif par communication par rétrodiffusion.

4. Appareil selon la revendication 1, ledit protocole RFID comprenant au moins l'un d'un protocole EPC, d'un protocole ISO, ou d'un protocole RFID.

5. Appareil selon la revendication 1, ledit protocole de dispositif comprenant au moins l'un d'un protocole série, d'un protocole parallèle et d'un protocole Ethernet.

6. Appareil selon la revendication 1, ledit convertisseur de protocole comprenant un récepteur RF pour recevoir la requête d'information.

7. Appareil selon la revendication 6, dans lequel ledit récepteur RF comprend :
une antenne ;
des circuits de récupération de données ; et
un modulateur.

8. Appareil selon la revendication 7, dans lequel lesdits circuits de récupération de données comprennent :
des circuits de redresseur ; et
un démodulateur.

9. Appareil selon la revendication 1, dans lequel ledit convertisseur de protocole comprend un processeur pour convertir ledit protocole RFID en ledit protocole de dispositif.

10. Appareil selon la revendication 9, dans lequel ledit processeur comprend un processeur interne audit dispositif électronique.

11. Appareil selon la revendication 9, dans lequel ledit processeur comprend un processeur externe audit dispositif électronique.

12. Appareil selon la revendication 9, dans lequel ledit processeur comprend un pilote de logiciel mémorisé.

13. Appareil selon la revendication 1, ledit convertisseur de protocole servant à fournir une capabilité de communication RFID interne audit dispositif électronique.

14. Appareil selon la revendication 1, ledit convertisseur de protocole servant à fournir une capabilité de communication RFID ajoutée audit dispositif électronique.

15. Système comprenant :
un dispositif électronique (304) pour communiquer des données de dispositif selon un protocole de dispositif, ledit dispositif électronique (304) n'ayant pas de capabilité de communication RFID ; et
un convertisseur de protocole (306) pour recevoir une requête d'information depuis un lecteur RFID (302), ladite requête d'information étant communiquée selon un protocole RFID natif audit lecteur RFID (302), ledit convertisseur de protocole (306) servant à convertir ladite requête d'information dudit protocole RFID en un protocole de dispositif et à communiquer ladite requête d'information audit dispositif électronique (304).

16. Procédé comprenant :
la réception d'une requête d'information depuis un lecteur RFID (302), ladite requête d'information étant communiquée selon un protocole RFID natif audit lecteur RFID (302) ;
la conversion de ladite requête d'information dudit protocole RFID en un protocole de dispositif ; et
la communication de ladite requête d'information à un dispositif électronique (304) n'ayant pas de capabilité de communication RFID selon ledit protocole de dispositif.

17. Procédé selon la revendication 16, comprenant en outre :
la réception de données de dispositif depuis ledit dispositif électronique selon ledit protocole de dispositif ; et
la transmission desdites données de dispositif audit lecteur RFID selon ledit protocole RFID.

18. Procédé selon la revendication 17, comprenant en outre la transmission desdites données de dispositif par communication par rétrodiffusion.

19. Procédé selon la revendication 16, ledit protocole RFID comprenant au moins l'un d'un protocole EPC, d'un protocole ISO, ou d'un protocole RFID propriétaire.

20. Procédé selon la revendication 16, ledit protocole de dispositif comprenant au moins l'un d'un protocole série, d'un protocole parallèle et d'un protocole Ethernet.
